# NEW EUROPEAN PATENT SPECIFICATION

(11) **EP 1 264 808 B2**
(45) Date of publication and mention of the opposition decision: **18.11.2020**
(45) Mention of the grant of the patent: 27.02.2013
(21) Application number: 02011134.0
(22) Date of filing: 21.05.2002
(51) Int. Cl.: C04B 24/38, C04B 28/02

(54) **Use of additives based on hydroxylalkyl guar derivatives in cementitious mortars and mortars containing them**
Zusatzstoffe auf der Basis von Hydroxyalkylguarderivaten zur Verwendung in Zementmörteln und Mörtel die diese Zusatzstoffe enthalten
Additifs à base de dérivés hydroxyalcoyles de gomme de guar pour être utilisés dans les mortiers à base de ciment et mortiers les contenant

(30) Priority: 04.06.2001 IT VA20010015
(43) Date of publication of application: 11.12.2002
(73) Proprietor: LAMBERTI S.p.A., 21041 Albizzate (Varese) (IT)
(72) Inventor: Sironi, Enrico, 21041 Albizzate (VA) (IT); Margheritis, Giampietro, 21041 Albizzate (VA) (IT); Pfeiffer, Ugo Claudio, 21041 Albizzate (VA) (IT); Li Bassi, Giuseppe, 21041 Albizzate (VA) (IT)
(74) Representative: Gislon, Gabriele

(56) References cited:
- EP-A- 0 119 012
- EP-A1- 0 773 198
- EP-A2- 0 232 513
- EP-A2- 0 269 015
- WO-A-99/55632
- DE-T2- 69 909 630
- JP-A- H03 126 651
- US-A- 464 581
- DATABASE WPI Week 199128 Derwent Publications Ltd., London, GB; AN 1991-203073 XP002213717 "Additives for extrusion forming compsn. - comprises guar gum derivs. e.g. polyoxyalkylene guar gum added to cement material" & JP 03 126651 A (SANYO CHEM IND LTD), 29 May 1991 (1991-05-29)
- DATABASE WPI Week 199402 Derwent Publications Ltd., London, GB; AN 1994-012096 XP002213718 "Heat insulating refractory spray material with good adhesion to steel framework - comprises vermiculitic, cement, dispersant and polysaccharide produced by fermentation as thickener" & JP 05 319942 A (SANSHO KK), 3 December 1993 (1993-12-03)
- Fax from CHT R.Beitzlich to Alsecco GmbH from 23.09.19997
- product description & safety data sheet AGOCEL P 260 H
- letter from CHR R.Beitlich to Maxit Germany GmbH from 21.08.1998
- fax from CHT R.Beitlich GmbH to Strasservil Eurovente SA from 04.12.2000
- fax from CHT R.Beitlich GmbH to Knauf Marmorit GmbH from 23.05.2000
- 'Was ist eine Konzentration?' in 'Nachrichten aus der Chemie', 64, 04/2016, S. 437-438
- DIN EN 106-1
- DIN EN 413-1
- 'Limestone' in 'Dictionary of Construction' 2015
- 'Portland cement' in 'Dictionary of Construction' 2015

## Description

The present invention refers to dry cementitious mortar compositions containing an additive.

Specifically, the additives of the invention essentially consist of a hydroxyalkyl guar derivative having a molar substitution of from 0,7 to 3.

It is well known the use of cementitious mortars as adhesives or jointing compositions in the building industry, particularly to adhere tiles or ceramics in general, vertically or horizontally, to plane surfaces of different kinds, such as to concrete, plywood or brick surfaces.

The compositions used for the above-mentioned scope generally consist of cement mixed with a variable amount of sand; right before use a proper amount of water is added to the mixture, making it workable and allowing the spreading of thin strata of mortar on the back side of the tile or object which is to be applied.

The setting of the mortar begins indeed during this step and will result in its complete hardening and exhibiting those physic and mechanic features that allow the stable and lasting adhesion of the tile on the surface to which it was applied.

The setting is a rather complex chemical process that leads to polymeric inorganic structures whose strong reciprocal interactions result in the formation of steady, strong masses and in the above said macroscopic effects.

The hardening of the mortar permits its strong adhesion both to the tile and to the underlying surface.

In setting many features are of importance and influence not only its speed but also its final effectiveness, i.e. its solidity.

Among these features of fundamental importance are the content of water and the capability of the mass of retaining the proper amount of water during the whole setting process and until all the desired characteristics are obtained.

As a matter of fact all the surfaces to which tiles are generally applied are porous and absorbent, and then eager of water, being able to absorb water from the mass in the area of contact, thus creating defects in the setting which soon or later will result in the detachment of the tile.

Among the principal problems encountered by the applicator is a too rapid hardening of the mortar which prevents the adjustment of the tiles during their laying.

This problem is called "lack of open time" and/or "lack of adjustability time". Vice versa, if the content of water becomes excessive, even though locally and because of lack of homogeneity of the mixing or of the surfaces, and the setting is too slow owing to a too flowing mixture, the tile tends to slip down dragged by its weight, the application becomes imprecise and difficult and working time grows longer.

Furthermore, water in the mixture acts as a lubricant for the solid particles while mortar is spread on the surface of the object which is to be applied.

The proper amount of water gives to the mixture the "pastiness" or "creaminess" suitable for a uniform, homogeneous and easy laying.

With regards to this, the rheological characteristics of the final mixture are very important and they depend on the kind and on the amount of the different components of the mixture itself.

The rheology of the mixture sand/cement/water is not suitable for use because of the lack of the above-mentioned characteristics, and more generally, because of its poor workability.

To overcome these problems additives are used in the formulation of adhesives acting as retention aid and rheology modifiers; these are generally synthetic or semi-synthetic polymers (which means that they are chemically modified natural polymer) exhibiting the specific characteristic of bonding and coordinating a large amount of water molecules once they are dissolved in water. These products, and among these in particular cellulose ethers, are highly purified products whose preparation requires many sophisticated and complex purification steps. They are rather expensive products.

In literature many mixtures are described for use in cementitious mortars, such as in US 4,501,617, US 5,366,550, US 4,065,319, US 5,575,840, US 4,939,192, US 5,753,036, US 4,525,500, US 4,402,752, US 4,846,889, US 5,432,215 e US 4,487,864, wherein mixtures are also described whose components show synergic effects.

In particular, in US 4,487,864 and in US 5,432,215 guar derivatives are cited among the natural products capable of increasing the viscosity of cementitious mortar, but it is taught to use them in combination with other rheology modifiers to reach the desired levels of viscosity and water retention. US 4,487,864 does not describe hydroxyalkyl guar additives for cementitious mortars with a defined molar substitution of 0.7 to 3. WO99/55632 relates to additives for concrete which are polysaccharide ethers, but it does not disclose the use of hydroxyalkyl guar having defined molar substitution, nor it is addressed to solve the problem of adhesion of cementitious compositions. Although titling a joint cement, EP 1 19012 actually does not use any cement as binding agent in its compositions, but limestone; moreover it does not suggest the use of additives essentially consisting of a guar derivative. Hydroxypropyl guars having a molar substitution (MS) of at least 0.6, and in particular having MS values of 1.1, 1.6 and 2.6, are disclosed in US 4,645,812, as suspending agents in the suspension polymerization of vinyl chloride.

The hydroxyalkyl guar derivatives are semi-synthetic derivatives, that due to their low production cost, are very interesting in view of the replacement of other products now in use.

Guar, or guar gum, is a polysaccharide belonging to the family of galactomannans and is extracted from a leguminosae, "Cyamopsis Tetragonolobus", that grows in the semi-dry region of tropical countries, particularly in India and in Pakistan.

Its hydroxyethyl and hydroxypropyl derivatives (respectively HEG and HPG) are commonly employed in the textile industry as printing paste thickeners, in the paints and coatings industry as rheology modifiers, in the drilling industry, in paper and explosives production and in other industry sectors (Industrial Gums 3rd Ed., 1993, Academic Press Inc., pp 199-205).

The polysaccharidic molecule of guar consists of a main linear chain of polymannose bearing branches of galactose units in a molar ratio of about 2:1.

The products commercially available generally have a molar substitution equal or smaller than 0,4 and a molecular weight normally of from 200.000 to 500.000 daltons.

In the present text, the molar substitution, that is the average number of moles of alkylating agent added per monosaccharidic unit, is also indicated with MS.

The most common substituent groups are the 2-hydroxyethyl and the 2-hydroxypropyl group which are respectively obtained by the reaction with ethylene oxide and propylene oxide.

Such traditional guar derivatives do not possess the proper characteristics to formulate a composition for use in cementitious mortars.

Evidences of their unsuitability have also been pointed out by well known laboratory tests, by comparing said products with the commonly used cellulose ethers.

The main critical characteristic of a cementitious mortar is its adhesion strength.

More specifically, the initial adhesion of cementitious compositions containing hydroxyalkl guar derivatives with a molar substitution equal or smaller than 0,4, measured according to EN standard 1348, is unfortunately lower of 30-50% than the one of cementitious compositions containing those cellulose ethers commonly used in such formulations.

Many attempts have been made to positively modify the characteristics of guar derivatives and to make them suitable for use in cementitious mortars. Surprisingly, it has now been found that hydroxyalkyl guar derivatives characterized by a molar substitution greater than 0,7 are particularly suitable as additives for cementitious mortars, being able to impart them an initial adhesion as good as the one given by cellulose ethers.

A further relevant advantage given by the use of the guar derivatives of the present invention is the fact that, surprisingly, they can be used crude as they guarantee good performances without the need of a purification step after their preparation, and, as a consequence, they are obtainable at a lower factory cost.

### DETAILED DESCRIPTION.

According to a fundamental aspect of the present invention the dry cementitious mortar composition contains an additives which essentially consists of one or more hydroxyalkyl guar derivatives having a molar substitution of from 0,7 to 3.

The preferred hydroxyalkyl guar derivatives are hydroxypropyl guar, hydroxyethyl guar and hydroxyethylhydroxypropyl guar.

While the hydroxyalkyl guar derivatives having a molar substitution equal or smaller than 0,4, even when used in combination with cellulose ethers, do not exhibit the desirable performances, a further surprising advantage of the hydroxyalkyl guar derivatives of the present invention is that they can be used in combination with the cellulose ethers in any ratio without altering their properties.

Examples of cellulose ether utilizable according to the present invention are methyl cellulose, hydroxyethyl cellulose, hydroxypropyl cellulose, hydroxypropylmethyl cellulose, ethylhydroxyethyl cellulose, hydroxybutylmethyl cellulose, hydroxyethylhydroxypropyl cellulose.

In another aspect this invention is a dry cementitious composition characterized by the fact that it contains from 30 to 80% by weight of sand, from 30 to 80% of cement, from 0 to 7% by weight of a polymeric organic binder and from 0,1 to 1,5% by weight, preferably from 0,1 to 0,8%, of an additive essentially consisting of one or more hydroxyalkyl guar derivative having a molar substitution of from 0,7 to 3.

Preferably the dry cementitious composition of the present invention contain from 1 to 7% by weight of a polymeric organic binder.

Examples of utilizable polymeric organic binders are vinyl polymers and copolymers in the form of dispersible powder, such as vinylacetate-ethylene copolymers.

The cementitious mortar of the present invention may additionally contain one or more accelerators, such as calcium formate.

As already stated, the use of hydroxyalkyl guar derivatives having an MS equal or smaller than 0,4 in many kind of building compositions is well known, but it does not allow to obtain those characteristics required by the above-mentioned applications.

The ideal additive for cementitious tile mortar must exhibit the following characteristics:
an initial adhesion grater then 0,5 N/mm²;
a percentage of covering grater than 30% after 10';
an adjustability time equal or grater than 10'.

Surprisingly, the hydroxyalkyl guar derivatives of the present invention having a high molar substitution, even though they do not need a purification step and are obtainable with a much lower factory cost than the one of the cellulose ethers commonly employed, impart to the cementitious mortars all the above-mentioned characteristics.

The cementitious mortars of the present invention are prepared from the dry composition of sand, cement, hydroxyalkyl guar derivative and, optionally, polymeric organic binder, by adding gradually said composition to water and mixing.

The correct amount of water is the one that makes it possible to obtain the cementitious mortar in the form of a slurry possessing a good workability and uniformly spreadable on the surface where the tile is to be installed.

Normally this amount ranges from 10 to 45, preferably from 20 to 35, parts by weight of water per 100 parts by weight of dry composition.

In the following examples the initial adhesion is measured according to EN standard 1348, by using both porous (Faenza) and non absorbent (gres) tiles.

The percentage of covering is determined by the following method.

The cementitious mortar is prepared manually and allowed to stand for about 5 minutes.

The cementitious mortar is mixed for 15-20 seconds before application.

The cementitious mortar is then applied to a surface of concrete bricks by means of a trowel.

After 5 minutes and after 10 minutes from the application a 50x50x8 mm porous ceramic tile with a minimum water absorbance of 12% and smooth on both sides is laid down; a 2 Kg weight is then applied to the tile for thirty seconds.

The tile is pulled off and the area of the tile covered with mortar is measured by means of a caliber.

The result of test is reported as percentage of covering and is related to the time elapsed from the application of the mortar.

A high percentage of covering is indicative of a good affinity of the mortar with the tile.

The adjustability time is determined as follows.

The cementitious mortar is prepared manually and allowed to stand for about 5 minutes.

The cementitious mortar is mixed for 15-20 seconds before application.

The cementitious mortar is then applied to a surface of concrete bricks by means of a trowel and allowed to stand for 2 minutes.

Three 50x50x8 mm porous ceramic tile with a minimum water absorbance of 12% and smooth on both sides are laid down spacing them out of at least 5 cm.

A 2 Kg weight is then applied to the tiles for thirty seconds. After 5, 10 and 15 minutes from the application of mortar one of the tiles is manually rotated of 90 degrees, verifying if this causes its detachment or not.

The adjustability time is reported in minutes and it corresponds to the maximum time at which it is possible to rotate the tile without its detachment from the mortar.

### EXAMPLE 1.

A dry cementitious mortar composition (Composition A) is prepared combining:

| | |
|---|---|
| Silica sand (0- 0,5 mm) | 57,3 (parts by weight) |
| Portland Cement I 42.5 R | 38,2 (parts by weight) |
| Calcium formate | 0,5 (parts by weight) |
| Vinnapas® RE 5010⁽¹⁾ | 4,0 (parts by weight) |
| (1) a vinylacetate-ethylene copolymer available from Wacker. | |

By using Composition A and the following procedure ten cementitious mortars are prepared whose compositions are reported in Table 1.

0,4% by weight of a rheology modifier is added to Composition A, homogenizing.

100 parts by weight of the thus obtained dry composition are then slowly added to 20 parts by weight of water and the mass is manually stirred until a slurry with a uniform consistency is formed.

To improve the cementitious mortar workability some more water is added, taking care that slip, measured according to EN standard 1308, does not exceed 5 mm.

**Table 1.**

| **Cementitious Mortar** | **Chemical nature of the rheology modifier** | **Parts by weight of water per 100 parts by weight of dry composition** |
|---|---|---|
| A1 comparative | Methyl hydroxypropyl cellulose (1) | 21 |
| A2 comparative | Methyl hydroxyethyl cellulose (2) | 21 |
| A3 comparative | Hydroxyethyl guar M.S. 0,25 | 24 |
| A4 comparative | Hydroxypropyl guar M.S. 0,24 | 22 |
| A5 comparative | Hydroxypropyl guar M.S. 0,4 | 22 |
| A6 | Hydroxypropyl guar M.S. 0,9 | 21 |
| A7 | Depolymerized Hydroxypropyl guar M.S. 1,1 | 20 |
| A8 | Hydroxypropyl guar M.S. 1,1 | 21 |
| A9 | Hydroxypropyl guar M.S. 1,3 | 21 |
| A10 | Hydroxypropyl Hydroxyethyl guar M.S. 1,3 | 21 |
| (1) Culminal® 40000 (Aqualon) | | |
| (2) Culminal® Pff 15000 (Aqualon) | | |

The cementitious mortar of Table 1. are applicatively tested by measuring their initial adhesion on porous (Faenza) and non absorbent (gres) tiles, according to the above-mentioned standard.

The results are summarized in Table 2.

**Table 2.**

| | **A1** | **A2** | **A3** | **A4** | **A5** | **A6** | **A7** | **A8** | **A9** | **A10** |
|---|---|---|---|---|---|---|---|---|---|---|
| Initial adhesion on Faenza tile (N/mm²) | 1,17 | 1,58 | 0,78 | 0,53 | 0,31 | 1,51 | 1,45 | 2,03 | 2,21 | 1,96 |
| Initial adhesion on gres tile (N/mm²) | 1,12 | 1,39 | 0,33 | 0,39 | 0,69 | 1,18 | 1,72 | 1,67 | 1,75 | 1,61 |

### EXAMPLE 2.

A dry cementitious mortar composition (Composition B) is prepared combining:

| | |
|---|---|
| Silica sand (0- 0,5 mm) | 58,5 (parts by weight) |
| Portland Cement I 42,5 R | 39,0 (parts by weight) |
| Calcium formate | 0,5 (parts by weight) |
| Vinnapas® RE 5010⁽¹⁾ | 2,0 (parts by weight) |
| (1) a vinylacetate-ethylene copolymer available from Wacker. | |

By using Composition B and the following procedure ten cementitious mortars are prepared whose compositions are reported in Table 3. 0,4% by weight of a rheology modifier is added to Composition B, homogenizing.

100 parts by weight of the thus obtained dry composition are then slowly added to 20 parts by weight of water and the mass is manually stirred until a slurry with a uniform consistency is formed.

The improve the cementitious mortar workability more water is added, taking care that slip, measured according to EN standard 1308, does not exceed 5 mm.

**Table 3.**

| **Cementitious Mortar** | **Chemical nature of the rheology modifier** | **Parts by weight of water per 100 parts by weight of dry composition** |
|---|---|---|
| B1 comparative | Methyl hydroxypropyl cellulose (1) | 22 |
| B2 comparative | Methyl hydroxyethyl cellulose (2) | 23 |
| B3 comparative | Hydroxyethyl guar M.S.0,25 | 26 |
| B4 comparative | Hydroxypropyl guar M.S. 0,24 | 26 |
| B5 comparative | Hydroxypropyl guar M.S. 0,4 | 25 |
| B6 | Hydroxypropyl guar M.S. 0,9 | 24 |
| B7 | Depolymerized Hydroxypropyl guar M.S. 1,1 | 23 |
| B8 | Hydroxypropyl guar M.S. 1,1 | 24 |
| B9 | Hydroxypropyl guar M.S. 1,3 | 23 |
| B10 | Hydroxypropyl Hydroxyethyl guar M.S. 1,3 | 23 |
| (1) Culminal® 40000 (Aqualon) | | |
| (2) Culminal® Pff 15000 (Aqualon) | | |

The cementitious mortar of Table 3. are applicatively tested by measuring their initial adhesion on porous (Faenza) and non absorbent (gres) tiles, according to the above-mentioned standard.

The percentage of covering and the adjustability time are measured according to the above-described methods.

The results are summarized in Table 4.

**Table 4.**

| | **B1** | **B2** | **B3** | **B4** | **B5** | **B6** | **B7** | **B8** | **B9** | **B10** |
|---|---|---|---|---|---|---|---|---|---|---|
| Initial adhesion on Faenza tile (N/mm²) | 1,37 | 1,35 | 0,60 | 0,61 | 0,22 | 1,41 | 1,64 | 1,18 | 1,22 | 1,86 |
| Initial adhesion on gres tile (N/mm²) | 1,21 | 1,23 | 0,22 | 0,28 | 0,34 | 1,11 | 1,81 | 1,26 | 1,11 | 1,41 |
| Percentage of covering at 5' | 85 | 98 | 50 | 0 | 0 | 98 | 98 | 98 | 95 | 98 |
| Percentage of covering at 10' | 30 | 82 | 48 | - | - | 77 | 90 | 98 | 85 | 95 |
| Adjustability time in minutes | 15 | 15 | 10 | 5 | 5 | 15 | 10 | 10 | 10 | 10 |

### EXAMPLE 3.

A dry cementitious mortar composition (Composition C) is prepared combining:

| | |
|---|---|
| Silica Sand (0- 0,5 mm) | 59,7 (parts by weight) |
| Portland Cement I 42,5 R | 39,8 (parts by weight) |
| Calcium Formate | 0,5 (parts by weight) |

By using Composition C and the following procedure ten cementitious mortars are prepared whose compositions are reported in Table 5.

0,4% by weight of a rheology modifier is added to Composition C, homogenizing.

100 parts by weight of the thus obtained dry composition are then slowly added to 20 parts by weight of water and the mass is manually stirred until a slurry with a uniform consistency is formed.

To improve the cementitious mortar workability more water is added, taking care that slip, measured according to EN standard 1308, does not exceed 5 mm.

**Table 5.**

| **Cementitious Mortar** | **Chemical nature of the rheology modifier** | **Parts by weight of water per 100 parts by weight of dry composition** |
|---|---|---|
| C1 comparative | Methyl hydroxypropyl cellulose (1) | 22 |
| C2 comparative | Methyl hydroxyethyl cellulose (2) | 22 |
| C3 comparative | Hydroxyethyl guar M.S. 0,25 | 27 |
| C4 comparative | Hydroxypropyl guar M.S. 0,24 | 27 |
| C5 comparative | Hydroxypropyl guar M.S. 0,4 | 27 |
| C6 | Hydroxypropyl guar M.S. 0,9 | 24 |
| C7 | Depolymerized Hydroxypropyl guar M.S. 1,1 | 23 |
| C8 | Hydroxypropyl guar M.S. 1,1 | 24 |
| C9 | Hydroxypropyl guar M.S. 1,3 | 24 |
| C10 | Hydroxypropyl Hydroxyethyl guar M.S. 1,3 | 23 |
| (1) Culminal® 40000 (Aqualon) | | |
| (2) Culminal® Pff 15000 (Aqualon) | | |

The cementitious mortar of Table 5. are applicatively tested by measuring their initial adhesion on porous (Faenza) and non absorbent (gres) tiles, according to the above-mentioned standard.

The percentage of covering and the ajustability time are measured according to the above-described methods.

The results are summarized in Table 6.

**Table 6.**

| | **C1** | **C2** | **C3** | **C4** | **C5** | **C6** | **C7** | **C8** | **C9** | **C10** |
|---|---|---|---|---|---|---|---|---|---|---|
| Initial adhesion on Faenza tile (N/mm²) | 0,57 | 0,85 | 0,15 | 0,14 | n.a. | 0,68 | 0,69 | 0,85 | 0,78 | 0,72 |
| Initial adhesion on gres tile (N/mm²) | 0,79 | 0,76 | 0,01 | 0,00 | 0,00 | 0,40 | 0,60 | 0,82 | 0,66 | 0,55 |
| Percentage of covering at 5' | 85 | 100 | 0 | 0 | 0 | 89 | 98 | 90 | 98 | 100 |
| Percentage of covering at 10' | 35 | 50 | - | - | - | 38 | 43 | 82 | 98 | 65 |
| Adjustability time in minutes | 15 | 15 | <5 | <5 | <5 | 10 | 10 | 10 | 15 | 5 |

### EXAMPLE 4.

A dry cementitious mortar composition (Composition D) is prepared combining:

| | |
|---|---|
| Silica Sand (0- 0,5 mm) | 70 (parts by weight) |
| Portland Cement I 42,5 R | 30 (parts by weight) |

By using Composition D and the following procedure five cementitious mortars are prepared whose compositions are reported in Table 7.

0,3% by weight of a rheology modifier whose composition is reported in Table 7. is added to Composition D, homogenizing.

100 parts by weight of the thus obtained dry composition are then slowly added to 20 parts by weight of water and the mass is manually stirred until a slurry with a uniform consistency is formed.

To improve the cementitious mortar workability more water is added, taking care that slip, measured according to EN standard 1308, does not exceed 5 mm.

**Table 7.**

| **Cementitious mortar** | **Composition of the Rheology modifier** | **Parts by weight of water per 100 parts by weight of dry composition** |
|---|---|---|
| D1 comparative | Modified methyl cellulose ⁽¹⁾ | 25 |
| D2 comparative | Modified methyl cellulose ⁽¹⁾ (4 parts by weight) Hydroxypropyl guar M.S. 1,3(1 part by weight) | 24 |
| D3 comparative | Modified methyl cellulose ⁽¹⁾ (2 parts by weight) Hydroxypropyl guar M.S. 1,3(1 part by weight) | 24 |
| D4 comparative | Modified methyl cellulose ⁽¹⁾ (1 part by weight) Hydroxypropyl guar M.S. 1,3(1 part by weight) | 24 |
| D5 comparative | Modified methyl cellulose ⁽¹⁾ (1 part by weight) Hydroxypropyl guar M.S. 1,3 (2,3 parts by weight) | 24 |
| (1) Culminal® 9115 (Aqualon) | | |

The cementitious mortar of Table 7. are applicatively tested by measuring their initial adhesion on porous (Faenza) and non absorbent (gres) tiles, according to the above-mentioned standard.

The percentage of covering and the adjustability time are measured according to the above-described methods.

The results are summarized in Table 8.

**Table 8.**

| | **D1** | **D2** | **D3** | **D4** | **D5** |
|---|---|---|---|---|---|
| Initial adhesion on Faenza tile (N/mm²) | 0,63 | 0,55 | 0,61 | 0,64 | 0,39 |
| Initial adhesion on gres tile (N/mm²) | 0,74 | 0,71 | 0,60 | 0,91 | 0,64 |
| Percentage of covering at 5' | 95 | 98 | 98 | 100 | 98 |
| Percentage of covering at 10' | 90 | 62 | 97 | 95 | 75 |
| Adjustability time in minutes | 15 | 15 | 15 | 15 | 15 |

## Claims

1. Dry cementitious mortar composition **characterized by** the fact that it contains from 30 to 80% by weight of sand, from 30 to 80% of cement, from 0 to 7% by weight of a polymeric organic binder and from 0.1 to 1.5% by weight of an additive which essentially consists of one or more hydroxyalkyl guar derivatives having a molar substitution of from 0.7 to 3.

2. Dry cementitious mortar composition according to Claim 1, **characterized by** the fact that said hydroxyalkyl guar derivatives are selected from the group consisting of hydroxypropylguar, hydroxyethyl guar and hydroxyethylhydroxypropyl guar.

3. Dry cementitious mortar composition according to Claim 1, **characterized by** the fact that it contains from 0.1 to 0.8% by weight of said additive.

4. Dry cementitious mortar composition according to Claim 1, **characterized by** the fact that it contains from 1 to 7% by weight of a polymeric organic polymer.

5. Cementitious mortar prepared by mixing the dry composition of Claim 1 and an amount of water of from 10 to 45 parts by weight per 100 parts by weight of dry composition.

6. Cementitious mortar according to Claim 5, wherein the dry composition is mixed with from 20 to 35 parts by weight of water.

## Patentansprüche

1. Trockene zementartige Mörtelzusammensetzung, **dadurch gekennzeichnet, dass** sie zwischen 30 und 80% Gewichtsanteile Sand, zwischen 30 und 80% Zement, zwischen 0 und 7% Gewichtsanteile eines polymerischen organischen Bindemittels und zwischen 0,1 und 1,5 % Gewichtsanteile eines Additivs enthält, das im Wesentlichen aus einem oder mehreren Hydroxyalkyl-Guar-Derivaten mit einer molaren Substitution zwischen 0,7 und 3 besteht.

2. Trockene zementartige Mörtelzusammensetzung gemäß Patentanspruch 1 **dadurch gekennzeichnet, dass** besagte Hydroxyalkyl-Guar-Derivate aus der aus Hydroxypropyl-Guar, Hydroxyethyl-Guar und Hydroxyethylhydroxypropyl-Guar bestehenden Gruppe ausgewählt werden.

3. Trockene zementartige Mörtelzusammensetzung gemäß Patentanspruch 1 **dadurch gekennzeichnet, dass** sie zwischen 0,1 und 0,8% Gewichtsanteile des besagten Additivs enthält.

4. Trockene zementartige Mörtelzusammensetzung gemäß Patentanspruch 1 **dadurch gekennzeichnet, dass** sie zwischen 1 und 7% Gewichtsanteile eines polymerischen organischen Polymers enthält.

5. Zementartiger Mörtel, zubereitet durch Mischen einer gemäß Patentanspruch 1 beschaffenen trockenen Zusammensetzung und einer 10 bis 45 Gewichtsanteilen Wasser pro 100 Gewichtsanteile trockener Zusammensetzung.

6. Zementartiger Mörtel gemäß Patentanspruch 5, wobei die trockene Zusammensetzung mit 20 bis 35 Gewichtsanteilen Wasser gemischt wird.

## Revendications

1. Composition de mortier cimentaire sèche **caractérisée en ce qu'**elle contient de 30 à 80 % en poids de sable, de 30 à 80 % de ciment, de 0 à 7 % en poids d'un liant organique polymère et de 0,1 à 1,5 % en poids d'un additif lequel consiste essentiellement en ou plusieurs dérivés hydroxyalkylés du guar ayant un degré de substitution moléculaire de 0,7 à 3.

2. Composition de mortier cimentaire sèche selon la revendication 1, **caractérisée en ce que** lesdits dérivés hydroxyalkylés du guar sont choisis dans le groupe formé par l'(hydroxypropyl)guar, l'(hydroxyéthyl)guar et l'(hydroxyéthylhydroxypropyl)guar.

3. Composition de mortier cimentaire sèche selon la revendication 1, **caractérisée en ce qu'**elle contient de 0,1 à 0,8 % en poids dudit additif.

4. Composition de mortier cimentaire sèche selon la revendication 1, **caractérisée en ce qu'**elle contient de 1 à 7 % en poids d'un polymère organique polymère.

5. Mortier cimentaire préparé en mélangeant la composition sèche selon la revendication 1 et une quantité d'eau allant de 10 à 45 parties en poids pour 100 parties en poids de composition sèche.

6. Mortier cimentaire selon la revendication 5, dans lequel la composition sèche est mélangée avec 20 à 35 parties en poids d'eau.
